# EUROPÄISCHE PATENTSCHRIFT

(11) **EP 3 898 064 B1**
(45) Veröffentlichungstag und Bekanntmachung des Hinweises auf die Patenterteilung: **27.04.2022**
(21) Anmeldenummer: 19818011.9
(22) Anmeldetag: 06.12.2019
(51) Int. Cl.: B23K 26/06, G02B 1/02, G02B 7/02

(54) **VORRICHTUNG FÜR EIN LASERBEARBEITUNGSSYSTEM UND LASERBEARBEITUNGSSYSTEM MIT EINER DERARTIGEN VORRICHTUNG**
DEVICE FOR A LASER MACHINING SYSTEM, AND LASER MACHINING SYSTEM HAVING A DEVICE OF THIS KIND
DISPOSITIF POUR UN SYSTÈME D'USINAGE LASER ET SYSTÈME D'USINAGE LASER POURVU D'UN DISPOSITIF DE CE TYPE

(30) Priorität: 20.12.2018 DE 102018133020
(43) Veröffentlichungstag der Anmeldung: 27.10.2021
(73) Patentinhaber: Precitec GmbH & Co. KG, 76571 Gaggenau (DE)
(72) Erfinder: BLÁZQUEZ-SÁNCHEZ, David, 76571 Gaggenau (DE)
(74) Vertreter: Ter Meer Steinmeister & Partner
(86) Internationale Anmeldenummer: PCT/EP2019/084018
(87) Internationale Veröffentlichungsnummer: WO 2020/126557

(56) Entgegenhaltungen:
- DE-A1-102011 016 932
- DE-A1-102012 108 214
- DE-B4-102012 108 214
- US-A- 5 948 172

## Beschreibung

Die vorliegende Offenbarung betrifft eine Vorrichtung für ein Laserbearbeitungssystem oder einen Laserbearbeitungskopf, wie beispielsweise einen Schneid- oder Schweißkopf, und ein Laserbearbeitungssystem mit einer solchen Vorrichtung. Die vorliegende Offenbarung betrifft insbesondere die Vermeidung von laserstrahlinduzierten Beschädigungen von Laserstrahloptiken.

### Stand der Technik

In einer Vorrichtung zur Materialbearbeitung mittels Laser, z.B. in einem Laserbearbeitungskopf etwa zum Laserschweißen oder Laserschneiden, wird der von einer Laserlichtquelle oder einem Ende einer Laserleitfaser austretende Laserstrahl mit Hilfe einer Strahlführungs- und Fokussierungsoptik auf das zu bearbeitende Werkstück fokussiert oder gebündelt. Standardmäßig wird ein Laserbearbeitungskopf mit einer Kollimator-Optik und einer Fokussier-Optik verwendet, wobei das Laserlicht über eine Lichtleitfaser zugeführt wird.

Bei der Lasermaterialbearbeitung kann es zu Verunreinigungen im Laserbearbeitungskopf, wie zum Beispiel zu Verunreinigungen von Strahlformungsoptiken oder Abbildungselementen, etwa von Linsen oder Spiegeln, kommen, wodurch eine Qualität und/oder Produktivität der Lasermaterialbearbeitung vermindert wird. Die Ursachen der Verunreinigungen sind vielfältig. Zum Beispiel kann es durch Rauch und Sputter von Metallen, die durch ein Laserschneiden oder Laserschweißen entstehen, zu Verunreinigungen kommen. In einem weiteren Beispiel muss der Laserbearbeitungskopf in einer Industrieumgebung geöffnet werden, beispielsweise um eine Lichtleitfaser eines fasergekoppelten Strahlführungssystems zu wechseln. Durch das Öffnen kann Schmutz aus der Umgebung und/oder Abrieb in den Kopf gelangen. Weitere Beispiele für Ursachen von Verunreinigungen sind Kondenswasser, wenn die Kühlwassertemperatur unter dem Taupunkt liegt, eine Kontamination aus dem Schneidgas oder Spülgas und Montage- oder Handhabungsfehler, wie z.B. Fingerabdrücke auf den Optiken. Verunreinigungen vermindern zunächst die Qualität des Laserprozesses, wie z.B. einer Schneidqualität, durch eine Änderung der Brechkraft der verschmutzen Optiken. Denn Verschmutzungen führen im Allgemeinen zu einer Absorption von Laserenergie an der entsprechenden Stelle und somit zu einer lokalen Erwärmung, was wiederum eine Brechkraftänderung mit sich bringt. Dies kann also zum sogenannten thermischen Fokusshift führen. Auch kann es durch die lokale Erwärmung sogar zu einer Beschädigung der Optiken kommen, was zu einem Maschinenstillstand und zusätzlichen Kosten durch Reparatur und Ersatzteile führt.

Lokalisierte absorbierende Defekte auf optischen Komponenten sind Schwachstelle für Hochlaserleistungsoptiken, weil sie zu laserinduzierten Schäden führen. Da sich die Verunreinigungen auf der Oberfläche der optischen Komponenten befinden, werden laserinduzierte Schäden zuerst an der Oberfläche bzw. an der Beschichtung zu finden sein. In der Regel koppeln optische Absorptionsprozesse thermische Energie in die Beschichtung bzw. in die optische Komponente ein und verursachen einen starken Temperaturanstieg, bis ein Ausfall durch Überhitzung auftritt. In manchen Fällen kann hierdurch die Beschichtung schmelzen, in anderen Fällen führt eine thermische Ausdehnung die zu hohem mechanischen Stress und nachfolgender Ablösung der Beschichtung oder sogar zu Sprüngen in den optischen Komponenten selbst. In der Patentanmeldung DE-A1-102012108214 wird eine Laserstrahloptik mit einem abschließenden optischen Element gezeigt, welches einen hohen Wärmeleitkoeffizienten aufweist. Eine Vorrichtung für eine Laserbearbeitung mit einer austauschbaren Kassette einer Laserstrahloptik ist aus der Patentanmeldung DE-A1-102011016932 bekannt.

### Offenbarung der Erfindung

Es ist eine Aufgabe der vorliegenden Offenbarung, eine Vorrichtung für ein Laserbearbeitungssystem und ein Laserbearbeitungssystem mit einer solchen Vorrichtung anzugeben, die negative Auswirkungen einer Verschmutzung von Laserstrahloptiken reduzieren oder sogar verhindern können. Insbesondere ist es eine Aufgabe der vorliegenden Offenbarung, eine Laserstahloptik bereitzustellen, die einen durch eine Verschmutzung der Laserstrahloptik verursachten Maschinenstillstand verhindern kann. Diese Aufgabe wird durch den Gegenstand der unabhängigen Ansprüche gelöst. Vorteilhafte Ausgestaltungen der Erfindung sind in den Unteransprüchen angegeben.

Gemäß einem unabhängigen Aspekt der vorliegenden Offenbarung ist eine Vorrichtung für ein Laserbearbeitungssystem, insbesondere für einen Laserbearbeitungskopf, angegeben. Die Vorrichtung umfasst eine Laserstrahloptik für einen Laserstrahl, umfassend eine Anordnung von optischen Elementen, die aufeinanderfolgend in einem Strahlengang des Laserstrahls angeordnet sind. In Bezug auf eine Ausbreitungsrichtung des Laserstrahls besteht ein erstes äußerstes optisches Element der Anordnung von optischen Elementen aus einem Material, das einen Wärmeleitkoeffizienten *k_{T}* von 2 W/(m K) oder mehr, oder sogar von 9 W/(m·K) oder mehr aufweist. Das erste äußerste optische Element kann ein optisches Element sein, das die Anordnung der optischen Elemente nach außen abschließt. Das äußerste optische Element kann auch als abschließendes optisches Element bezeichnet werden.

Mit anderen Worten umfasst eine Vorrichtung für ein Laserbearbeitungssystem, insbesondere für einen Laserbearbeitungskopf, eine Anordnung von optischen Elementen für eine Laserstrahloptik, wobei die optischen Elemente hintereinander bzw. aufeinanderfolgend entlang einer (optischen) Achse der Anordnung angeordnet sind, wobei mindestens ein abschließendes optisches Element die Anordnung von optischen Elementen in Richtung der (optischen) Achse der Anordnung abschließt und aus einem Material besteht, das einen Wärmeleitkoeffizienten *k_{T}* von 2 W/(m·K) oder mehr aufweist. Die optischen Elemente der Anordnung können jeweils eine optische Achse aufweisen, die koaxial mit der optischen Achse der Anordnung ist. Die (optische) Achse der Anordnung kann einer Strahlachse des Laserstrahls entsprechen, in einem Zustand der Vorrichtung, in dem sie in ein Laserbearbeitungssystem bzw. in einem Laserbearbeitungskopf eingesetzt ist.

Erfindungsgemäß ist wenigstens ein äußerstes bzw. abschließendes optisches Element, das die Anordnung nach außen hin abschließt, aus einem Material mit einem hohen Wärmeleitkoeffizienten, insbesondere mit einem höheren Wärmeleitkoeffizienten als Quarzglas, vorgesehen. Wenn Verunreinigungen auf der Oberfläche dieses Elements vorhanden sind, kann es am Ort der Verunreinigung zu einer laserstrahlinduzierten lokalen Erwärmung kommen. Durch den hohen Wärmeleitkoeffizienten kann die Wärme effizient und schnell abgeführt werden, wodurch laserstrahlinduzierte Schäden verhindert werden können. Damit können Maschinenstillstandzeiten reduziert und eine Produktivität erhöht werden.

Zudem ermöglicht die Verwendung des erfindungsgemäßen Materials mit der hohen Wärmeleitfähigkeit nicht nur eine passive Kühlung des optischen Elements, sondern bietet auch die Möglichkeit einer effizienten aktiven Kühlung. Zum Beispiel sind Saphiroptiken, die mit Hilfe einer wassergekühlten Wärmesenke gekühlt werden, deutlich effizienter. Die aktive Wasserkühlung kann den Maschinenstillstand im Vergleich zu passiv gekühlten Optiken weiter reduzieren.

Die Laserstrahloptik umfasst eine Laserstrahleingangsseite, durch die ein Laserstrahl in die Laserstrahloptik eintritt, und eine Laserstrahlausgangsseite, durch die der Laserstrahl aus der Laserstrahloptik austritt. Erfindungsgemäß ist das erste äußerste bzw. abschließende optische Element laserstrahleingangsseitig angeordnet. Zum Beispiel können die optischen Elemente der Anordnung entlang einer vertikalen Achse angeordnet sein, so dass das erste äußerste optische Element ein oberstes optisches Element ist. Schmutzpartikel, die aufgrund der Schwerkraft von oben nach unten fallen, können auf die äußere Oberfläche des ersten äußersten optischen Elements fallen. Durch den hohen Wärmeleitkoeffizienten können laserinduzierte Beschädigungen trotzdem verhindert werden.

Erfindungsgemäß umfasst die Anordnung von optischen Elementen in Bezug auf die Ausbreitungsrichtung des Bearbeitungslaserstrahls ein zweites äußerstes bzw. abschließendes optisches Element. Das zweite äußerste optische Element ist laserstrahlausgangsseitig angeordnet. Zum Beispiel kann das zweite äußerste optische Element ein unterstes optisches Element der Anordnung sein. Das erste äußerste optische Element und das zweite äußerste optische Element können an gegenüberliegenden Seiten der Anordnung angeordnet sein. Insbesondere können das erste äußerste optische Element und das zweite äußerste optische Element einen Abschluss der Anordnung bzw. der Vorrichtung, wie zum Beispiel einer Linsenkassette, bilden.

Vorzugsweise umfasst die Anordnung von optischen Elementen wenigstens ein weiteres optisches Element, das zwischen dem ersten äußersten optischen Element und dem zweiten äußersten optischen Element angeordnet ist. Damit kann die Anordnung eine Vielzahl von optischen Elementen umfassen, wobei das die Anordnung bzw. die Vorrichtung nach oben abschießende optische Element aus dem Material mit dem hohen Wärmeleitkoeffizienten bestehen kann. Das wenigstens eine weitere optische Element und optional das zweite äußerste optische Element können aus Materialien mit Wärmeleitkoeffizienten bestehen, die jeweils kleiner als der Wärmeleitkoeffizient des ersten äußersten optischen Elements sind.

In einem Beispiel welches nicht der Erfindung entspricht besteht das zweite äußerste optische Element auch aus einem Material, das einen Wärmeleitkoeffizienten *k_{T}* von 2 W/(m·K) oder mehr, oder sogar von 9 W/(m·K) oder mehr aufweist. Zum Beispiel können das erste äußerste optische Element und das zweite äußerste optische Element aus demselben Material bestehen. Insbesondere können die nach außen abschließenden Elemente den hohen Wärmeleitkoeffizienten aufweisen. In einer anderen Ausführungsform können das erste äußerste optische Element und das zweite äußerste optische Element aus unterschiedlichen Materialien bestehen.

Vorzugsweise ist das erste äußerste optische Element aus der Gruppe ausgewählt, die ein Schutzglas, eine Linse, eine Strahlformungsoptik, einen Strahlteiler, einen Spiegel ein transmissives optisches Element, und eine Kollimatorlinse umfasst. Das zweite äußerste optische Element ist erfindungsgemäss ein Schutzglas.

Vorzugsweise ist das Material des ersten äußersten optischen Elements und/oder das Material des zweiten äußersten optischen Elements aus der Gruppe ausgewählt, die Al₂O₃ (Saphir), ZnS (Zinksulfid), ZnSe (Zinkselen), CaF₂ (Calciumfluorid), Kristallquarz und Diamant umfasst. Vorzugsweise ist das Material des ersten äußersten optischen Elements und/oder das Material des zweiten äußersten optischen Elements Saphir.

Vorzugsweise ist die Vorrichtung eine Linsenkassette, insbesondere eine auswechselbare Linsenkassette. Die Anordnung von optischen Elementen ist in der Linsenkassette enthalten. Das erste und/oder zweite abschließende optische Element kann die Linsenkassette luftdicht abdichten. Hierfür kann auch eines oder mehrere Dichtelemente vorgesehen sein. Die Linsenkassette kann aus dem Laserbearbeitungssystem, und insbesondere dem Laserbearbeitungskopf entnehmbar bzw. in denselben einsetzbar sein. Die Linsenkassette kann zum Beispiel für verschiedene Anwendungen ausgetauscht werden, wodurch ein Laserbearbeitungskopf mit hoher Flexibilität bereitgestellt wird.

Vorzugsweise umfasst die Vorrichtung eine Beschichtung, insbesondere eine Antireflexionsbeschichtung, auf dem ersten äußersten optischen Element und/oder dem zweiten äußersten optischen Element. Die Antireflexionsbeschichtung kann zum Beispiel aus MgF₂ bestehen. Das Material des äußersten optischen Elements mit der hohen Wärmeleitfähigkeit kann zum Beispiel ein Substrat bilden, auf dem die Antireflexionsbeschichtung aufgebracht ist. Vorzugsweise weist das äußerste optische Element mit der Beschichtung einen geringeren Wärmeausdehnungskoeffizienten und/oder eine höhere Bruchzähigkeit auf, als ohne die Beschichtung. Beispielsweise kann das äußerste optische Element mit der Beschichtung einen Wärmeausdehnungskoeffizienten von 7,7^{∗}10⁻⁶ K⁻¹ oder weniger aufweisen.

Gemäß einem weiteren Aspekt der vorliegenden Offenbarung ist ein Laserbearbeitungssystem, und insbesondere ein Laserbearbeitungskopf, wie beispielsweise ein Schneid- oder Schweißkopf, angegeben. Das Laserbearbeitungssystem umfasst eine Laservorrichtung zum Bereitstellen eines Laserstrahls, insbesondere eines Bearbeitungslaserstrahls, und die in diesem Dokument beschriebene Vorrichtung, die in den Strahlengang des Laserstrahls eingesetzt ist. Der Strahlengang des Laserstrahls kann koaxial mit einer optischen Achse der Vorrichtung bzw. mit den optischen Achsen der in der Vorrichtung enthaltenen optischen Elementen angeordnet sein. Vorzugsweise ist die Laserstrahloptik so im Strahlengang des Laserstrahls angeordnet, dass die optischen Elemente der Anordnung in vertikaler Richtung hintereinander angeordnet sind. Hier kann eine Laserstrahleingangsseite der Laserstrahloptik oben und eine Laserstrahlausgangsseite der Laserstrahloptik unten angeordnet sein.

### Kurze Beschreibung der Zeichnungen

Ausführungsbeispiele der Offenbarung sind in den Figuren dargestellt und werden im Folgenden näher beschrieben. Es zeigen:
Figur 1 ein Laserbearbeitungssystem gemäß Ausführungsformen der vorliegenden Offenbarung,
Figur 2 oben eine beispielhafte Anordnung welche nicht der Erfindung entspricht und Figur 2 unten eine Anordnung von optischen Elementen gemäß einer Ausführungsform der vorliegenden Offenbarung,
Figur 3 eine Anordnung von optischen Elementen gemäß weiteren Ausführungsformen der vorliegenden Offenbarung, und
Figur 4 eine Anordnung von optischen Elementen gemäß noch weiteren Ausführungsformen der vorliegenden Offenbarung.

### Ausführungsformen der Offenbarung

Im Folgenden werden, sofern nicht anders vermerkt, für gleiche und gleichwirkende Elemente gleiche Bezugszeichen verwendet.

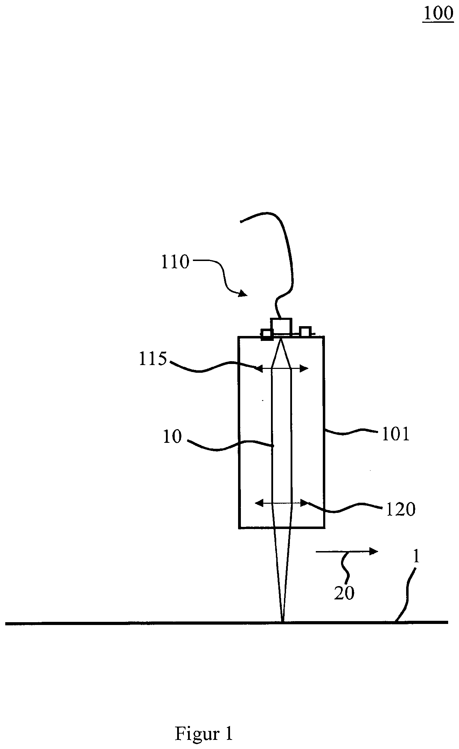

Figur 1 zeigt ein Laserbearbeitungssystem 100 gemäß Ausführungsformen der vorliegenden Offenbarung.

Das Laserbearbeitungssystem 100 kann einen Bearbeitungskopf 101, wie beispielsweise einen Schneidkopf oder Schweißkopf, umfassen oder ein solcher Bearbeitungskopf 101 sein. Das Laserbearbeitungssystem 100 oder Teile davon, wie beispielsweise der Bearbeitungskopf 101, kann gemäß Ausführungsformen entlang einer Bearbeitungsrichtung 20 bewegbar sein. Die Bearbeitungsrichtung 20 kann eine Schweißrichtung und/oder eine Bewegungsrichtung des Laserbearbeitungssystems 100, wie beispielsweise des Bearbeitungskopf 101, bezüglich des Werkstücks 1 sein. Insbesondere kann die Bearbeitungsrichtung 20 eine horizontale Richtung sein. Die Bearbeitungsrichtung 20 kann auch als "Vorschubrichtung" bezeichnet werden.

Das Laserbearbeitungssystem 100 umfasst eine Laservorrichtung 110 zum Bereitstellen eines Bearbeitungslaserstrahls 10 (auch als "Bearbeitungsstrahl" oder "Laserstahl" bezeichnet). Die Laservorrichtung 110 kann eine Lichtleitfaser umfassen oder eine Lichtleitfaser sein, über die der Laserstrahl 10 in den Bearbeitungskopf 101 geliefert wird.

Das Laserbearbeitungssystem 100 umfasst eine Laserstrahloptik. Die Laserstrahloptik weist eine Kollimatoroptik 115, wie beispielsweise eine Kollimatorlinse oder ein Linsensystem mit mehreren Linsen, zur Kollimation des Laserstrahls 10 auf.

Der Laserstrahl 10 kann von der Laservorrichtung 110 über eine optionale optische Vorrichtung der Laserstrahloptik (nicht gezeigt), die ein Schutzglas vor der Kollimatoroptik, ein Spiegel, eine Linse oder eine Blende oder eine Kombination davon sein kann, zur Kollimatoroptik 115 laufen.

In den Ausführungsformen umfasst die Laserstrahloptik eine Fokussieroptik 120, wie beispielsweise eine Fokuslinse oder ein oder ein Zoomsystem mit mehreren Linsen, zur Fokussierung des Laserstrahls 10 auf das Werkstück 1. Die Kollimatoroptik 115 und die Fokussieroptik 120 können in den Bearbeitungskopf 101 integriert sein. Die Laserstrahloptik kann eine oder mehrere auswechselbare Linsenkassetten oder fest in den Bearbeitungskopf 101 integrierte optische Elemente umfassen. Beispielsweise kann der Bearbeitungskopf 101 ein Optik-Modul, z.B. ein Kollimator-, Zoom- oder Fokussier-Modul, umfassen, das in den Bearbeitungskopf 101 integriert oder am Bearbeitungskopf 101 montiert ist. Das Kollimator- und das Fokussier-Modul können zum Beispiel als auswechselbare Linsenkassetten bereitgestellt sein.

Die Laserstrahloptik umfasst (oder ist) die erfindungsgemäße Anordnung von optischen Elementen, bei der zumindest ein äußerstes bzw. nach außen hin abschließendes optisches Element aus einem Material besteht, das einen größeren Wärmeleitkoeffizienten *k_{T}* als das üblicherweise für Optiken verwendete Quarzglas aufweist, d.h. das einen Wärmeleitkoeffizienten *k_{T}* von 1,5 W/(m·K) oder mehr aufweist.

Das Material des abschließenden optischen Elements kann zum Beispiel Al₂O₃ (Saphir), ZnS (Zinksulfid), ZnSe (Zinkselen), CaF₂ (Calciumfluorid), Kristallquarz oder Diamant sein. Zum Beispiel weist Al₂O₃ einen Wärmeleitkoeffizienten *k_{T}* von ca. 46 W/(m·K) auf. ZnS weist einen Wärmeleitkoeffizienten *k_{T}* von ca. 27 W/(m·K) auf. ZnSe weist einen Wärmeleitkoeffizienten *k_{T}* von ca. 16 W/(m·K) auf. CaF₂ weist einen Wärmeleitkoeffizienten *k_{T}* von ca. 9,71 W/(m·K) auf. Diamant weist einen Wärmeleitkoeffizienten *k_{T}* von ca. 2200 W/(m·K) auf. Durch derartige hohe Wärmeleitkoeffizienten kann die Wärme, die an Oberflächenstellen mit Verunreinigungen durch den Bearbeitungslaserstrahl 10 eingebracht wird, effizient und schnell abgeführt werden, wodurch laserstrahlinduzierte Schäden verhindert werden können. Damit können Maschinenstillstandzeiten reduziert und eine Produktivität erhöht werden.

Vorzugsweise wird Saphir für das abschließende optische Element verwendet. Die Wärmeleitfähigkeit von Saphir ist ca. 30-mal höher als die von dem herkömmlicher Weise verwendeten Quarzglas, sodass ein durch eine Verschmutzung verursachter Temperaturanstieg etwa 30-mal geringer wird.

In einigen Ausführungsformen, die mit den anderen in diesem Dokument beschriebenen Ausführungsformen kombiniert werden können, umfasst die Vorrichtung eine Beschichtung auf dem abschließenden optischen Element. Vorzugsweise ist das Material der Beschichtung derart auf das Material des abschließenden optischen Elements abgestimmt, dass ein Wärmeausdehnungskoeffizient verringert oder eine Bruchzähigkeit erhöht wird. Beispielsweise kann die Beschichtung eine dielektrische Beschichtung oder eine Antireflexionsbeschichtung sein. Die Beschichtung kann zum Beispiel aus MgF₂ (Magnesiumfluorid) bestehen. Das Material des optischen Elements kann zum Beispiel ein Substrat bilden, auf dem die Beschichtung als Schicht oder Film aufgebracht ist.

Typischerweise ist ein thermischer Ausdehnungskoeffizient der Antireflexionsbeschichtung an einen thermischen Ausdehnungskoeffizienten des Materials des optischen Elements mit der hohen Wärmeleitfähigkeit angepasst. Zum Beispiel erfolgt die Auswahl des Materials der Antireflexionsbeschichtung derart, dass bei der Laserbearbeitung typischerweise auftretende Temperaturunterschiede zu keiner Ablösung der Antireflexionsbeschichtung vom optischen Element führen. Anders gesagt kann der mechanische Stress, der durch Temperaturunterschiede verursacht wird, klein genug sein, um eine Beschädigung bzw. Ablösung der Antireflexionsbeschichtung zu verhindern.

Das abschließende optische Element kann ein optisches Element mit einem hohen Verschmutzungsrisiko sein, das vorzugsweise nicht oft gewechselt werden muss, d.h. kein Verschleißteil ist. Das abschließende optische Element kann das optische Element sein, das am nächsten zur Laservorrichtung 110 angeordnet ist. Das abschließende optische Element kann im Wesentlichen horizontal im Bearbeitungskopf 101 angeordnet sein. Das abschließende optische Element kann in einem Bereich im Bearbeitungskopf 101 angeordnet sein, in dem der Laserstrahl im Wesentlichen vertikal verläuft. Beispielsweise kann das abschließende optische Element in der Laserstrahloptik oben angeordnet sein. Mit anderen Worten kann das abschließende optische Element im Laserstrahlengang vor anderen optischen Elementen der Laserstrahloptik angeordnet sein.

Vorzugsweise ist das wenigstens eine abschließende optische Element mit der hohen Wärmeleitfähigkeit aus der Gruppe ausgewählt, die ein Schutzglas, einen Spiegel, einen Strahlteiler, eine Strahlformungsoptik, eine Linse, ein transmissives optisches Element und eine Kollimatorlinse umfasst. Die Anordnung von zumindest einigen der optischen Elemente der Laserstrahloptik kann zum Beispiel in einer auswechselbaren Linsenkassette enthalten sein. Insbesondere kann wenigstens ein abschließendes optisches Element derart in der Linsenkassette angeordnet sein, dass es die Linsenkassette nach außen hin abdichtet. Hierbei ist das abschließende optische Element mit der hohen Wärmeleitfähigkeit vorzugsweise an einem Ende der Linsenkassette angeordnet, das der Laservorrichtung 110 zugewandt ist. Das Laserbearbeitungssystem kann eine Vielzahl von Linsenkassetten umfassen, z.B. jeweils eine für die Kollimation und/oder Fokussierung. Wenigstens eine Linsenkassette der Vielzahl von Linsenkassetten kann das erfindungsgemäße abschließende optische Elemente umfassen. Da das Material mit hoher Wärmeleitfähigkeit wie etwa Saphir unter Umständen höhere Herstellungs- oder Materialkosten oder auch schlechtere optische oder mechanische Eigenschaften als herkömmliche Materialien für optische Elemente wie etwa Quarzglas aufweist, wird das Material mit hoher Wärmeleitfähigkeit erfindungsgemäß für optische Elemente an bestimmten Positionen der Laseroptik eingesetzt.

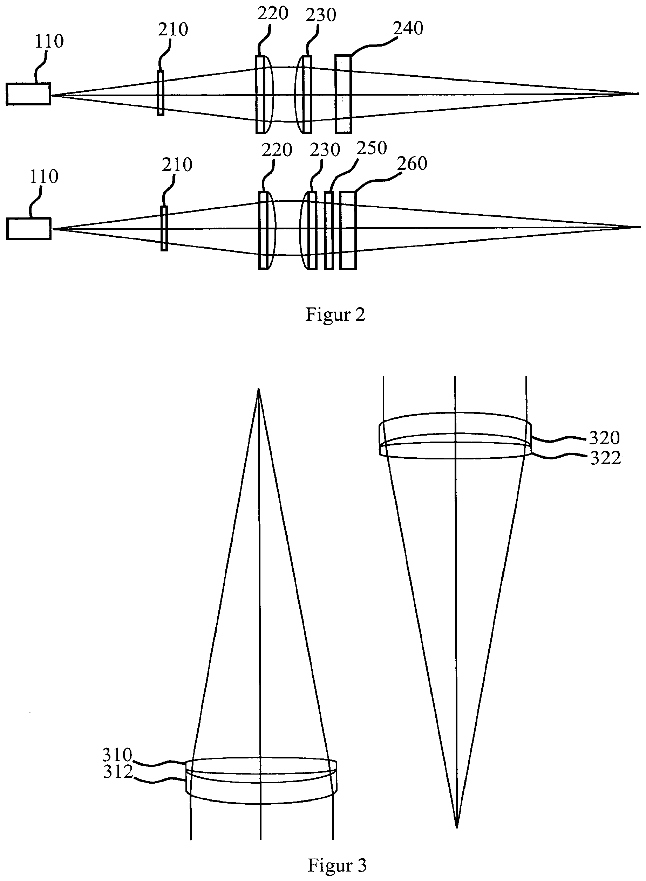

In den nachfolgenden Figuren 2 unten bis 4 sind verschiedene Beispiele einer erfindungsgemäßen Anordnung von optischen Elementen dargestellt. Die beispielhaften Anordnungen 2 bis 4 weisen jeweils wenigstens ein abschließendes optisches Element auf, das eine im Vergleich zu den anderen optischen Elementen höhere Wärmeleitfähigkeit aufweist. In den folgenden Figuren sind optische Elemente aus Material mit hoher Wärmeleitfähigkeit schattiert dargestellt.

In Figur 2 sind zwei Linsengruppen dargestellt, nämlich eine Kollimatoroptik 220 und eine Fokussieroptik 230. Die Kollimatoroptik 220 kann z.B. eine Kollimatorlinse oder eine Kollimator-Linsenanordnung sein. Die Fokussieroptik 230 kann z.B. eine Fokussierlinse oder eine Fokussier-Linsenanordnung sein. Zudem sind zwei oder mehr Schutzgläser vorgesehen.

In der oberen Darstellung der Figur 2, welches nicht der Erfindung entspricht, ist ein erstes Schutzglas 210 vor der Kollimatoroptik 220 und ein zweites Schutzglas 240 nach der Fokussieroptik 230 vorhanden. Die Begriffe "vor" und "nach" beziehen sich dabei auf eine Ausbreitungsrichtung des Bearbeitungslaserstrahls. Das Schutzglas 210 vor der Kollimatoroptik 220 schützt die Kollimation vor Verunreinigungen, die zum Beispiel bei einem Wechsel der Laservorrichtung 110, z.B. bei einem Fasereinstecken, verursacht werden können. Das Schutzglas 240 nach der Fokussieroptik 230 schützt die Fokussierung z.B. vor Schmauch und Spritzer des Laserprozesses.

Das erste Schutzglas 210 und das zweite Schutzglas 240 bilden die äußersten bzw. abschließenden optischen Elemente der oberen Anordnung in Fig. 2 und zumindest das am nächsten zur Laservorrichtung 110 angeordnete Schutzglas 210 besteht aus dem Material mit der hohen Wärmeleitfähigkeit, wie beispielsweise aus Saphir. Zum Beispiel können das erste Schutzglas 210 und/oder das zweite Schutzglas 240 an einer Außenseite des Laserbearbeitungskopfes angeordnet oder eingesetzt sein. In einigen Ausführungsformen können das erste Schutzglas 210 und/oder das zweite Schutzglas 240 den Laserbearbeitungskopf im Wesentlichen luftdicht verschließen.

In der unteren Darstellung der Figur 2 sind entsprechend der Erfindung zusätzlich zum ersten Schutzglas 210 vor
der Kollimatoroptik 220 wenigstens zwei zweite Schutzgläser 250, 260 nach der Fokussieroptik 230 vorhanden. Wenigstens ein zweites Schutzglas der wenigstens zwei zweiten Schutzgläser 250, 260 besteht aus dem Material mit der hohen Wärmeleitfähigkeit, wie beispielsweise Saphir. Vorzugsweise besteht das innenliegende Schutzglas 250, das zwischen der Fokussieroptik 230 und dem nach außen abschließenden Schutzglas 260 angeordnet ist, aus dem Material mit der hohen Wärmeleitfähigkeit, wie im unteren Teil der Figur 2 gezeigt. Das zweiten Glas 260 kann aus einem Material bestehen, das eine geringere Wärmeleitfähigkeit aufweist als das Material des ersten Glases 250. Insbesondere kann das zweite Glas aus Quarzglas bestehen. Das zweite nach außen abschließende Schutzglas 260 kann ein Verschleißteil sein, das vor Verunreinigungen bei Durchführung des Laserprozesses schützt.

Figur 3 zeigt eine Anordnung von optischen Elementen gemäß weiteren Ausführungsformen der vorliegenden Offenbarung. In der Regel fallen Schmutzpartikel in Richtung der Schwerkraft von oben nach unten. Daher kann aus Kostengründen alternativ nur dasjenige optische Element aus Material mit hoher Wärmeleitfähigkeit bestehen, das im Strahlengang oben, also als nächstes zur Laservorrichtung 110, angeordnet ist. Vorzugsweise ist die Linsenkassette mit Hilfe von abschließenden optischen Elementen und Dichtelementen abgedichtet. Es können auch Dichtelemente innerhalb der Linsenkassette zwischen den einzelnen optischen Elementen vorgesehen sein.

Links in der Figur 3 ist eine Linsenkassette mit der Kollimatoroptik dargestellt. Rechts in der Figur 3 ist eine Linsenkassette mit der Fokussieroptik dargestellt. Die Ausbreitungsrichtung des Laserstrahls 10 ist in beiden Darstellungen der Figur 3 von oben nach unten. Die Linsenkassetten können unabhängig voneinander sein, und können insbesondere unabhängig voneinander auswechselbar sein. Jede der Linsenkassetten umfasst eine jeweilige Anordnung mit einem optischen Element, das auf einer der Laservorrichtung 110 zugewandten Seite der Linsenkassette angeordnet ist und aus dem Material mit der hohen Wärmeleitfähigkeit besteht. Selbstverständlich lässt sich dieses Konzept auf jedwede Art von optischen Elementen, z.B. auf Strahlformungsoptiken, Spiegel, Strahlteiler, Linsengruppen oder Zoom-Optiken, anwenden.

In der linken Abbildung von Figur 3 besteht die Kollimatoroptik in der Linsenkassette aus einer Linsengruppe mit einer ersten Kollimatorlinse 310 und einer zweiten Kollimatorlinse 312. Die erste Kollimatorlinse 310, die bezogen auf die Vertikale eine obere Linse sein kann, ist aus dem Material mit der hohen Wärmeleitfähigkeit gefertigt, wie zum Beispiel Saphir. Die erste Kollimatorlinse 310 kann die Linsenkassette nach außen hin im Wesentlichen luftdicht abdichten, beispielsweise unter Verwendung eines Dichtmittels, wie eines Dichtrings.

Die zweite Kollimatorlinse 312, die bezogen auf die Vertikale eine untere Linse sein kann, kann in einigen Ausführungsformen auch aus einem Material mit der hohen Wärmeleitfähigkeit gefertigt sein, wie zum Beispiel Saphir. Insbesondere können die erste Kollimatorlinse 310 und die zweite Kollimatorlinse 312 aus demselben Material bestehen. Alternativ können die erste Kollimatorlinse 310 und die zweite Kollimatorlinse 312 aus verschiedenen Materialien bestehen. Zum Beispiel kann die zweite Kollimatorlinse 312 aus einem Material bestehen, das eine Wärmeleitfähigkeit aufweist, die geringer als die Wärmeleitfähigkeit der ersten Kollimatorlinse 310 ist. Insbesondere kann die zweite Kollimatorlinse 312 aus Quarzglas bestehen. Die zweite Kollimatorlinse 312 kann die Linsenkassette nach außen hin im Wesentlichen luftdicht abdichten, beispielsweise unter Verwendung eines Dichtmittels, wie eines Dichtrings.

Die in Figur 3 rechts dargestellte Linsenkassette enthält eine Fokussieroptik, die aus einer Linsengruppe mit einer ersten Fokussierlinse 320 und einer zweiten Fokussierlinse 322 besteht. Die erste Fokussierlinse 320, die bezogen auf die Vertikale eine obere Linse sein kann, ist aus dem Material mit der hohen Wärmeleitfähigkeit gefertigt, wie zum Beispiel Saphir. Die erste Fokussierlinse 320 kann die Linsenkassette nach außen hin im Wesentlichen luftdicht abdichten, beispielsweise unter Verwendung eines Dichtmittels, wie eines Dichtrings.

Die zweite Fokussierlinse 322, die bezogen auf die Vertikale eine untere Linse sein kann, kann in einigen Ausführungsformen auch aus einem Material mit der hohen Wärmeleitfähigkeit gefertigt sein, wie zum Beispiel Saphir. Insbesondere können die erste Fokussierlinse 320 und die zweite Fokussierlinse 322 aus demselben Material bestehen. Alternativ können die erste Fokussierlinse 320 und die zweite Fokussierlinse 322 aus verschiedenen Materialien bestehen. Zum Beispiel kann die zweite Fokussierlinse 322 aus einem Material bestehen, das eine Wärmeleitfähigkeit aufweist, die geringer als die Wärmeleitfähigkeit der ersten Fokussierlinse 320 ist. Insbesondere kann die zweite Fokussierlinse 322 aus Quarzglas bestehen. Die zweite Fokussierlinse 322 kann die Linsenkassette nach außen hin im Wesentlichen luftdicht abdichten, beispielsweise unter Verwendung eines Dichtmittels, wie eines Dichtrings.

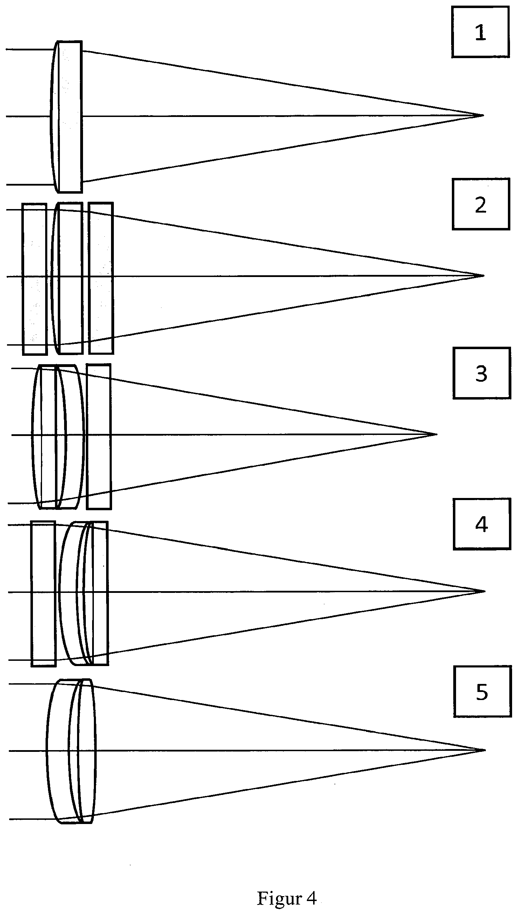

Figur 4 zeigt eine Anordnung von optischen Elementen gemäß noch weiteren Ausführungsformen der vorliegenden Offenbarung. In Figur 4 sind Beispiele gezeigt, in denen wenigstens ein äußerstes bzw. abschließendes optisches Element aus dem Material mit der hohen Wärmeleitfähigkeit (z.B. Saphir) besteht, das laserstrahleingangsseitig, d.h. auf einer der Laservorrichtung 110 zugewandten Seite, angeordnet ist. Die in Figur 4 dargestellten Konzepte sind insbesondere für Bearbeitungsköpfe mit austauschbaren Linsenkassetten, die eine größere Verschmutzungsgefahr bergen, anwendbar. Vorzugsweise wird für die die Linsenkassette nach außen abschließenden optischen Elemente ein Material mit hoher Wärmeleitfähigkeit, z.B. Saphir, verwendet.

Im Beispiel "1" ist eine Einzellinse aus Saphir dargestellt. Die Einzellinse kann zum Beispiel eine Kollimatorlinse oder eine Fokussierlinse sein.

Im Beispiel "2" ist eine Einzellinse mit zwei Schutzgläsern dargestellt. Die Einzellinse ist zwischen den beiden Schutzgläsern angeordnet. Wenigstens dasjenige der Schutzgläser, das der Laservorrichtung 110 zugewandt ist, d.h. laserstrahleingangseitig angeordnet ist, besteht aus dem Material mit der hohen Wärmeleitfähigkeit, wie zum Beispiel Saphir. Vorzugsweise bestehen beide Schutzgläser aus dem Material mit der hohen Wärmeleitfähigkeit. Die Einzellinse kann aus einem Material bestehen, das eine Wärmeleitfähigkeit aufweist, die geringer als die Wärmeleitfähigkeit der Schutzgläser ist. Die Einzellinse kann zum Beispiel aus Quarz bestehen. Die in Beispiel "2" von Figur 4 gezeigte Anordnung kann als Linsenkassette realisiert sein.

Im Beispiel "3" ist ein Linsensystem aus zwei Linsen mit einem Luftspalt und ein Schutzglas dargestellt. Das Schutzglas ist laserstrahlausgangsseitig angeordnet. Das Schutzglas kann zum Beispiel einem Fokuspunkt des Laserstrahls zugewandt sein.

Anders gesagt kann das Schutzglas strahlausgangsseitig bzw. auf der der Laservorrichtung 110 abgewandten Seite angeordnet sein. Das Linsensystem, das ein Fokussier-Linsensystem sein kann, umfasst eine erste Linse und eine zweite Linse, wobei die zweite Linse zwischen der ersten Linse und dem Schutzglas angeordnet ist. Die äußersten optischen Elemente, d.h. die erste Linse und das Schutzglas, können aus dem Material mit der hohen Wärmeleitfähigkeit, wie zum Beispiel Saphir bestehen. Zumindest aber besteht das laserstrahleingangseitig angeordnete optische Element, d.h. die erste Linse aus dem Material mit der hohen Wärmeleitfähigkeit. Die zweite Linse kann zum Beispiel aus Quarz bestehen. Die in Beispiel "3" von Figur 4 gezeigte Anordnung kann als Linsenkassette realisiert sein.

Das Beispiel "4" ist ähnlich zum Beispiel "3", wobei das Schutzglas laserstrahleingangsseitig angeordnet ist und aus dem Material mit der hohen Wärmeleitfähigkeit besteht. Das Schutzglas kann zum Beispiel einer Kollimatoroptik zugewandt sein. Die in Beispiel "4" von Figur 4 gezeigte Anordnung kann als Linsenkassette realisiert sein.

Im Beispiel "5" ist ein Linsensystem aus zwei Linsen mit einem Luftspalt dargestellt. Das Linsensystem kann ein Fokussier-Linsensystem sein. Beide Linsen können aus dem Material mit der hohen Wärmeleitfähigkeit, wie zum Beispiel Saphir bestehen. Zumindest aber besteht die der Laservorrichtung 110 zugewandte Linse aus dem Material mit der hohen Wärmeleitfähigkeit. Die in Beispiel "5" von Figur 4 gezeigte Anordnung kann als Linsenkassette realisiert sein.

Die oben genannten Ausführungsformen können eine laserstrahlinduzierte Beschädigung der Optiken aufgrund von Verschmutzungen verhindern. Die Ausführungsformen sind jedoch nicht nur vorteilhaft bezüglich der laserstrahlinduzierten Beschädigung, sondern können auch verwendet werden, um eine Änderung der Brechkraft der verschmutzen Optiken zu kompensieren.

Insbesondere können die Ausführungsformen der vorliegenden Offenbarung dazu verwendet werden, um einen Fokusshift aufgrund des Effekts einer thermischen Linse zu minimieren, wie im Folgenden erläutert wird. Eine Ursache für die sogenannte thermische Linse liegt in einer Änderung des Brechungsindex als Funktion der Temperatur. Ein Temperaturgradient durch Laserabsorption einer Verschmutzung führt deswegen zu einer Brechungsindex-Änderung und damit zum Fokusshift. Eine Möglichkeit, um den Fokusshift zur minimieren, ist die passive Kompensation. Hier werden mindestens zwei Materialen verwenden, nämlich ein Material mit einer positiven Brechungsindex-Änderung bzw. positivem Fokusshift und ein Material mit einer negativen Brechungsindex-Änderung bzw. negativem Fokusshift.

Einige Materialien wie z.B. Quarzglas oder Saphir, führen bei einer Temperaturerhöhung zu einer Erhöhung des Brechungsindex, d.h. die Brechungsindex-Änderung ist positiv. Ein Material, bei dem eine Temperaturerhöhung zu einem kleineren Brechungsindex führt, ist Calciumfluorid, und kann zum Beispiel für eine passive Kompensation des Fokusshift verwendet werden. Da Calciumfluorid einen hohen Wärmeausdehnungskoeffizienten und eine niedrige Bruchzähigkeit aufweist und daher sehr empfindlich bei Verschmutzung ist, wird Calciumfluorid vorzugsweise für ein weiteres optisches Element der Laseroptik verwendet, das in Bezug auf die Laserstrahlausbreitungsrichtung hinter dem optischen Element aus Material mit hoher Wärmeleitfähigkeit (Saphir) angeordnet ist.

Bezugnehmend auf die Beispiele "2" bis "4" in der Figur 4 wird erfindungsgemäß ein optisches Element aus CaF₂ zwischen das erste abschließende optische Element und das zweite abschließende optische Element angeordnet (Sandwich Konzept). Hierbei können die Materialien der einzelnen optischen Elemente derart gewählt werden, dass der Fokusshift passiv kompensiert wird. Insbesondere kann ein erstes und ein zweites abschließendes optisches Element aus einem Material mit einem positiven Brechungsindex-Gradienten und dazwischen ein weiteres optisches Element aus einem Material mit einem negativen Brechungsindex-Gradienten vorgesehen sein. Die Brechungsindex-Gradienten können sich im Wesentlichen gegenseitig aufheben. Das erste und das zweite abschließende optische Element können zum Beispiel aus Quarz oder Saphir bestehen, und das weitere dazwischen liegende optische Element kann aus Calciumfluorid bestehen. Wenn das erste und zweite abschließende optische Element die Linsenkassette luftdicht abdichten, kann dazwischen mindestens ein weiteres optisches Element in der Linsenkassette eingesetzt sein, das empfindlich für Verschmutzung ist, beispielsweise ein optisches Element aus Calciumfluorid, ohne die Gefahr von Maschinenstillstand aufgrund von Verschmutzung zu erhöhen.

Gemäß weiteren Ausführungsformen der vorliegenden Offenbarung ist eine Einrichtung zur aktiven Kühlung des zumindest einen abschließenden optischen Elements aus dem Material mit hoher Wärmeleitfähigkeit vorgesehen. Ein bevorzugtes Beispiel für ein Material mit hoher Wärmeleitfähigkeit ist Saphir. Aufgrund der hohen Wärmeleitfähigkeit ermöglicht Saphir eine aktive Kühlung des entsprechenden optischen Elements, die deutlich effizienter als bei einem aus Quarzglas bestehenden optischen Element ist. Ein Beispiel für eine Einrichtung zur aktiven Kühlung ist eine wassergekühlte Wärmesenke.

Erfindungsgemäß ist wenigstens ein optisches Element, das die Anordnung nach außen hin abschließt, aus einem Material mit einem hohen Wärmeleitkoeffizienten vorgesehen. Wenn Verunreinigungen auf der Oberfläche dieses Elements vorhanden sind, kann es am Ort der Verunreinigung zu einer laserstrahlinduzierten lokalen Erwärmung kommen. Durch den hohen Wärmeleitkoeffizienten kann die Wärme effizient und schnell abgeführt werden, wodurch laserstrahlinduzierte Schäden verhindert werden können. Damit können Maschinenstillstandzeiten reduziert und eine Produktivität erhöht werden. Das abschließende optische Element kann ferner eine Beschichtung aufweisen. Eine Kombination der Materialien für die Beschichtung und für das abschließende optische Element selbst kann so aufeinander abgestimmt sein, dass das beschichtete optische Element einen verringerten Wärmeausdehnungskoeffizienten und/oder eine höhere Bruchzähigkeit als das optische Element ohne Beschichtung aufweist.

## Patentansprüche

1. Vorrichtung für ein Laserbearbeitungssystem (100), umfassend:
eine Laserstrahloptik mit einer Anordnung von optischen Elementen umfassend eine Kollimatoroptik (220) und eine Fokussieroptik (230), wobei die optischen Elemente hintereinander auf einer Achse der Anordnung angeordnet sind,
wobei ein erstes abschließendes optisches Element (210) die Anordnung von optischen Elementen in Richtung der Achse auf einer Laserstrahleingangsseite der Laserstrahloptik abschließt und aus einem Material besteht, das einen Wärmeleitkoeffizienten *k_{T}* von 2 W/(m·K) oder mehr aufweist,
wobei ein zweites abschließendes optisches Element (260) die Anordnung von optischen Elementen laserstrahlausgangsseitig abschließt und ein Schutzglas aus Quarzglas ist, und
wobei die Anordnung von optischen Elementen ferner ein innenliegendes Schutzglas (250) zwischen der Fokussieroptik (230) und dem zweiten abschließenden optischen Element (260) umfasst, das aus einem Material mit einem größeren Wärmeleitkoeffizienten *k_{T}* als Quarzglas besteht.

2. Die Vorrichtung nach Anspruch 1, wobei die Anordnung von optischen Elementen wenigstens ein weiteres optisches Element (220, 230) umfasst, das zwischen dem ersten abschließenden optischen Element (210) und dem zweiten abschließenden optischen Element (260) angeordnet ist.

3. Die Vorrichtung nach Anspruch 2, wobei das weitere optische Element (220, 230) zwischen dem ersten abschließenden optischen Element (210) und dem zweiten abschließenden optischen Element 260) aus Calciumfluorid besteht oder Calciumfluorid enthält.

4. Die Vorrichtung nach einem der vorausgehenden Ansprüche, wobei das erste abschließende optische Element (210) aus einem Material besteht, das einen höheren Wärmeleitkoeffizienten als Quarzglas aufweist.

5. Die Vorrichtung nach einem der vorausgehenden Ansprüche, wobei das Material des ersten abschließende optischen Elements (210) aus der Gruppe ausgewählt ist, die aus Saphir, Zinksulfid, Zinkselen, Calciumfluorid, Kristallquarz und Diamant besteht.

6. Die Vorrichtung nach einem der vorausgehenden Ansprüche, wobei eine Beschichtung auf dem ersten abschließenden optischen Element (210) und/oder dem zweiten abschließenden optischen Element (260) vorgesehen ist.

7. Die Vorrichtung nach Anspruch 6, wobei das abschließende optische Element (210, 260) mit der Beschichtung einen niedrigeren Wärmeausdehnungskoeffizienten und/oder eine höhere Bruchzähigkeit als ohne die Beschichtung aufweist, und/oder wobei die Beschichtung eine Antireflexionsbeschichtung aus MgF₂ ist.

8. Die Vorrichtung nach einem der vorausgehenden Ansprüche, wobei das erste abschließende optische Element (210) aus der Gruppe ausgewählt ist, die aus einem Schutzglas, einer Strahlformungsoptik, einem Strahlteiler, einem Spiegel, einer Linse, einem transmissiven optischen Element und einer Kollimatorlinse besteht.

9. Die Vorrichtung nach einem der vorausgehenden Ansprüche, wobei die Vorrichtung eine auswechselbare Linsenkassette ist, in der die Anordnung von optischen Elementen enthalten ist.

10. Die Vorrichtung nach Anspruch 9, wobei das erste abschließende optische Element (210) und/oder das zweite abschließende optische Element (260) die Linsenkassette im Wesentlichen luftdicht abdichtet.

11. Laserbearbeitungssystem (100), umfassend:
eine Laservorrichtung (110) zum Bereitstellen eines Laserstrahls (10); und
die Vorrichtung nach einem der vorausgehenden Ansprüche, die in einem Strahlengang des Laserstrahls (10) eingesetzt ist.

12. Das Laserbearbeitungssystem (100) nach Anspruch 11, wobei die optischen Elemente der Laserstrahloptik entlang einer Ausbreitungsrichtung des Laserstrahls (10) in vertikaler Richtung angeordnet sind.

## Claims

1. A device for a laser machining system (100), comprising:
a laser beam optics with an arrangement of optical elements comprising a collimator optics (220) and a focusing optics (230), wherein the optical elements are arranged one after the other on an axis of the arrangement,
wherein a first closing optical element (210) closes off the arrangement of optical elements in the direction of the axis on a laser beam input side of the laser beam optics and consists of a material with a thermal conductivity coefficient *k_{T}* of 2 W/(m·K) or more,
wherein a second closing optical element (260) closes off the arrangement of optical elements on the laser beam output side and is a protective glass made of quartz glass, and
wherein the arrangement of optical elements further comprises an inner protective glass (250) consisting of a material with a higher thermal conductivity coefficient *k_{T}* than quartz glass between the focusing optics (230) and the second closing optical element (260).

2. The device according to claim 1, wherein the arrangement of optical elements comprises at least one further optical element (220, 230) disposed between the first closing optical element (210) and the second closing optical element (260).

3. The device according to claim 2, wherein the further optical element (220, 230) between the first closing optical element (210) and the second closing optical element (260) consists of calcium fluoride or contains calcium fluoride.

4. The device according to one of the preceding claims, wherein the first closing optical element (210) consists of a material with a higher thermal conductivity coefficient than quartz glass.

5. The device according to one of the preceding claims, wherein the material of the first closing optical element (210) is selected from the group consisting of sapphire, zinc sulfide, zinc selenium, calcium fluoride, crystal quartz and diamond.

6. The device according to one of the preceding claims, wherein a coating is provided on the first closing optical element (210) and/or the second closing optical element (240).

7. The device of claim 6, wherein the closing optical element (210, 260) with the coating has a lower coefficient of thermal expansion and/or higher fracture toughness than without the coating, and/or wherein the coating is an anti-reflective coating made of MgF₂.

8. The device according to one of the preceding claims, wherein the first closing optical element (210) is selected from the group consisting of a protective glass, a beam shaping optics, a beam splitter, a mirror, a lens, a transmissive optical element and a collimator lens.

9. The device according to one of the preceding claims, wherein the device is an exchangeable lens cartridge in which the arrangement of optical elements is included.

10. The device according to claim 9, wherein the first closing optical element (210) and/or the second closing optical element (260) seals the lens cartridge in a substantially airtight manner.

11. A laser machining system (100), comprising:
a laser device (110) for providing a laser beam (10); and
the device according to one of the preceding claims which is inserted in a beam path of the laser beam (10).

12. The laser machining system (100) according to claim 11, wherein the optical elements of the laser beam optics are arranged along a direction of propagation of the laser beam (10) in the vertical direction.

## Revendications

1. Dispositif pour un système d'usinage au laser (100), comprenant :
une optique à faisceau laser avec un ensemble d'éléments optiques incluant une optique de collimation (220) et une optique de focalisation (230), dans lequel les éléments optique sont agencés l'un derrière l'autre sur un axe de l'ensemble,
dans lequel un premier élément optique final (210) termine l'ensemble d'éléments optiques en direction de l'axe côté entrée du faisceau laser de l'optique à faisceau laser et est constitué d'un matériau qui a un coefficient de conductivité thermique *k_{T}* de 2 W/(m·K) ou plus,
dans lequel un second élément optique final (260) termine l'ensemble d'éléments optiques côté sortie du faisceau laser et est un verre de protection en verre de quartz, et
dans lequel l'ensemble d'éléments optiques comprend en outre un verre de protection situé à l'intérieur (250) entre l'optique de focalisation (230) et le second élément optique final (260), lequel verre de protection est constitué d'un matériau ayant un coefficient de conductivité thermique *k_{T}* supérieur à celui du verre de quartz.

2. Dispositif selon la revendication 1, dans lequel l'ensemble d'éléments optiques comprend au moins un élément optique supplémentaire (220, 230) qui est agencé entre le premier élément optique final (210) et le second élément optique final (260).

3. Dispositif selon la revendication 2, dans lequel l'élément optique supplémentaire (220, 230) entre le premier élément optique final (210) et le second élément optique final (260) est constitué de fluorure de calcium ou contient du fluorure de calcium.

4. Dispositif selon l'une des revendications précédentes, dans lequel le premier élément optique final (210) est constitué d'un matériau qui a un coefficient de conductivité thermique supérieur à celui du verre de quartz.

5. Dispositif selon l'une des revendications précédentes, dans lequel le matériau du premier élément optique final (210) est choisi parmi le groupe constitué de saphir, de sulfure de zinc, de sélénium de zinc, de fluorure de calcium, de quartz cristallin et de diamant.

6. Dispositif selon l'une des revendications précédentes, dans lequel un revêtement est prévu sur le premier élément optique final (210) et/ou le second élément optique final (260).

7. Dispositif selon la revendication 6, dans lequel l'élément optique final (210, 260) avec le revêtement a un coefficient de dilatation thermique plus faible et/ou une ténacité à la rupture plus élevée que sans le revêtement, et/ou dans lequel le revêtement est un revêtement anti-réflexion en MgF₂.

8. Dispositif selon l'une des revendications précédentes, dans lequel le premier élément optique final (210) est choisi parmi le groupe constitué d'un verre de protection, d'une optique de conformation de faisceau, d'un séparateur de faisceau, d'un miroir, d'une lentille, d'un élément optique transmissif et d'une lentille de collimation.

9. Dispositif selon l'une des revendications précédentes, dans lequel le dispositif est une cassette de lentilles interchangeable dans laquelle est contenu l'ensemble d'éléments optiques.

10. Dispositif selon la revendication 9, dans lequel le premier élément optique final (210) et/ou le second élément optique final (260) isole la cassette de lentilles de manière sensiblement étanche à l'air.

11. Système d'usinage au laser (100), comprenant :
un dispositif à laser (110) pour délivrer un faisceau laser (10) ; et
le dispositif selon l'une des revendications précédentes qui est utilisé dans un trajet de faisceau du faisceau laser (10).

12. Système d'usinage au laser (100) selon la revendication 11, dans lequel les éléments optiques de l'optique à faisceau laser sont agencés le long d'une direction de propagation du faisceau laser (10) dans une direction verticale.
